# EUROPÄISCHE PATENTANMELDUNG

(11) **EP 1 123 837 A2**
(43) Veröffentlichungstag der Anmeldung: **16.08.2001**
(21) Anmeldenummer: 01102635.8
(22) Anmeldetag: 07.02.2001
(51) Int. Cl.: B60P 3/36

(54) **Stauraum für Campingfahrzeug**

(30) Priorität: 09.02.2000 DE 10005967; 29.02.2000 DE 10009575
(71) Anmelder: DETHLEFFS GmbH, D-88316 Isny (DE)
(72) Erfinder: Riegel, Dieter, 73037 Göppingen-Holzheim (DE)
(74) Vertreter: Patentanwälte Eisele, Otten, Roth & Dobler

(57) **Zusammenfassung**

Campingfahrzeug (1), insbesondere Wohnmobil, Wohnwagen oder Campingbus mit einem Stauraum, wobei der Stauraum (3) eine Decke (5) aufweist, die diesen nach oben abgrenzt, wobei der Stauraum (3) mindestens eine Seitenwand (6) aufweist, die diesen zum Innenraum (7) abtrennt, und wobei der Stauraum (3) von außen und vom Innenraum (7) zugänglich ist. Hierbei ist es vorgesehen, den Stauraum (3) zeitweise ganz oder teilweise in den für Wohnzwecke genutzten Innenraum (7) des Campingfahrzeugs (1) zu integrieren.

## Beschreibung

Die Erfindung betrifft ein Campingfahrzeug nach dem Oberbegriff des Anspruchs 1.

In Campingfahrzeugen wie Wohnmobilen, Wohnwagen, Campingbussen oder dergleichen ist es sinnvoll, das vorhandene Raumangebot möglichst intensiv und vielseitig zu nutzen. Aus diesem Grund ist der Stauraum eines Campingfahrzeugs, der im Heck- oder Seitenbereich angeordnet ist, von außen und gegebenenfalls vom Innenraum des Fahrzeugs her zugänglich. Der Zugang vom Innenraum erfolgt bei bekannten Campingfahrzeugen durch eine Schiebetür, eine Klappe oder eine kleine Tür oder durch ein Hochschwenken einer Liegefläche. Durch diese Öffnung ist es möglich, den Stauraum vom Innenraum aus als "Kellerraum" zu nutzen.

Die Nutzungsmöglichkeiten des Stauraums sind jedoch eingeschränkt, da der Zugang eng ist und im Stauraum regelmäßig kein Stehen möglich ist.

Der vorliegenden Erfindung liegt daher die Aufgabe zugrunde, ein Campingfahrzeug wie Wohnmobil, Wohnwagen, Campingbus oder dergleichen vorzuschlagen, welches einen Stauraum aufweist, der leicht und bequem zugänglich ist und über das bloße Verstauen hinaus weitere Nutzungsmöglichkeiten zulässt.

Kern der Erfindung ist es, den Stauraum zeitweise ganz oder teilweise in den für Wohnzwecke genutzten Innenraum des Campingfahrzeugs zu integrieren.

Diese Aufgabe wird ausgehend von den Merkmalen des Oberbegriffs des Patentanspruchs 1 erfindungsgemäß durch die kennzeichnenden Merkmale des Patentanspruchs 1 gelöst.

Demgemäß ist vorgesehen, dass zumindest eine der den Stauraum zum Innenraum her abgrenzenden Wände zumindest teilweise entfernbar ist. Durch ein Zusammenschieben der Decke des Stauraums entsteht im Stauraum ein Bereich, in dem auch bei niedriger Stauraumhöhe z. B. ein Stehen möglich ist, da ein über dem Stauraum angeordneter Freiraum des Innenraums mit nutzbar wird. Durch eine solche Maßnahme ist es beispielsweise möglich, an einem im Stauraum abgestellten Fahrrad Wartungsarbeiten durchzuführen. Hierbei ist es nicht nur vorteilhaft, dass die Person eine bequeme Körperhaltung einnehmen kann, sondern sie kann die im Innenraum vorhandene Beleuchtung zur Ausleuchtung des Arbeitsbereichs nutzen und sich mit Personen, die sich im Innenraum aufhalten, problemlos unterhalten. Der Stauraum kann hierdurch auch als Spielplatz für Kinder genutzt werden.

Es ist besonders vorteilhaft, wenn die Decke und/oder die Seitenwand des Stauraums abnehmbar und/oder faltbar und/oder hoch- oder abklappbar befestigt ist, da sie sich in einem solchen Fall mit wenigen Handgriffen montieren und/oder demontieren lässt. Eine zusammenschiebbare und/oder aufrollbare Decke des Stauraums besitzt den Vorteil, dass ihre Position besonders schnell veränderbar ist.

Gemäß einer besonders vorteilhaften Ausführungsform des Erfindungsgegenstandes ist der Türsturz einer in der Seitenwand angeordneten Tür durch die entfernbare Decke gebildet. Somit kann der Stauraum bei entfernter Decke ohne das Hindernis eines Türsturzes betreten werden.

Es ist vorteilhaft, wenn auf der Decke des Stauraums eine Liegefläche angeordnet ist. Diese wird in der Regel nur dann genutzt, wenn sich niemand im Stauraum aufhält, so dass zwischen der Nutzung der Liegefläche und der erweiterten Nutzung des Stauraums kein Konflikt auftritt. Weiterhin ist die Liegefläche bei zusammengeschobener Decke immer noch als Teilliegefläche nutzbar.

Gemäß einer besonderen Ausführungsform des Erfindungsgegenstandes ist es vorgesehen, dass die Position der Decke des Stauraums in der Höhe verstellbar ist. Durch Versetzen der Decke in Richtung des Fahrzeugbodens ist es beispielsweise möglich, unter einer auf dem Stauraum angeordneten Liegefläche einen Teilstauraum auszubilden, der insbesondere als Bettkasten nutzbar ist. Eine weitere vorteilhafte Ausführungsform des Erfindungsgegenstandes sieht vor, dass ein oberhalb des Stauraums angeordnetes Staufach durch Entfernen der Decke des Stauraums dem Stauraum zuteilbar ist. Auf diese Weise ist es möglich, auch sehr hohe Gegenstände im Stauraum unterzubringen.

Eine zweckmäßige Ausgestaltung des Erfindungsgegenstandes sieht vor, dass im Stauraum mindestens ein Zwischenboden vorgesehen ist, der vorzugsweise höhenverstellbar und als Liegefläche ausgebildet ist. Durch einen derartigen Zwischenboden ist es möglich, bei entfernter Seitenwand ein Stockbett zu verwirklichen, das dem Innenraum des Campingfahrzeugs zugeordnet ist. Es ist auch vorgesehen, den Zwischenboden als Wickeltisch zu nutzen, in den eine Wickelstelle und/oder eine Babybadewanne integriert ist. Hierdurch ist es möglich, den Badbereich zu entlasten.

Weiterhin ist es vorteilhaft, wenn die vertikale Abgrenzung zwischen Innenraum und Stauraum beim Einsatz eines höhenverstellbaren Zwischenbodens durch Rolläden erfolgt, die vom Zwischenboden oder von der Decke bzw. vom Boden des Innenraums ausgehen. Auf diese Weise ist eine saubere Trennung zwischen Innenraum und Stauraum unabhängig von der Höhenposition des Zwischenbodens möglich.

Durch die Aufnahme des Rolladenkastens des die Seitenwand des Stauraums bildenden Rolladens im Bodenbereich des Campingfahrzeugs kann die Seitenwand so entfernt werden, dass keine störenden Kanten oder Schwellen die gemeinsame Nutzung von Stauraum und Innenraum behindern.

Weitere Einzelheiten der Erfindung werden in der Zeichnung anhand von schematisch dargestellten Ausführungsbeispielen beschrieben.

### Hierbei zeigt:

- Fig. 1: eine Seitenansicht eines Wohnmobils;
- Fig. 2: einen Schnitt entlang der Schnittlinie II-II des in Figur 1 dargestellten Wohnmobils in vergrößerter Darstellung;
- Fig. 3: einen Längsschnitt entlang der Schnittlinie III-III durch den Heckbereich des in Figur 2 dargestellten Wohnmobils;
- Fig. 4: eine Draufsicht auf ein aufgeschnitten dargestelltes Wohnmobil;
- Fig. 5: einen Schnitt durch das in Figur 4 dargestellte Wohnmobil entlang der Schnittlinie V-V;
- Fig. 6: eine Seitenansicht eines weiteren Wohnmobils ,das im Heckbereich aufgeschnitten dargestellt ist;
- Fig. 7: eine Draufsicht auf den Heckbereich eines weiteren Wohnmobils;
- Fig. 8: Seitenansicht eines weiteren Wohnmobils, das im Heckbereich aufgeschnitten dargestellt ist;
- Fig. 9: einen Schnitt entlang der Schnittlinie IX-IX des in Figur 8 dargestellten Wohnmobils;
- Fig. 10: eine Seitenansicht des Heckbereichs eines weiteren Wohnmobils;
- Fig. 11: einen Schnitt entlang der Schnittlinie XI-XI des in Figur 10 dargestellten Wohnmobils;
- Fig. 12: eine Seitenansicht eines weiteren Wohnmobils, das im Heckbereich aufgeschnitten dargestellt ist.

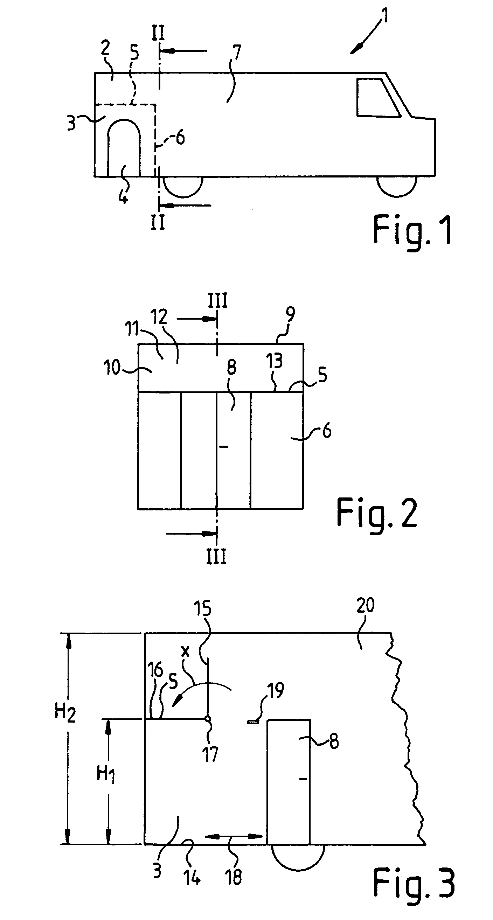

In Figur 1 ist ein Wohnmobil 1 zu sehen. Das Wohnmobil 1 besitzt im Heckbereich 2 einen Stauraum 3, der durch eine Tür 4 von außen zugänglich ist. Der Stauraum 3 ist durch eine Decke 5 und eine Seitenwand 6 gegen den Innenraum 7 des Wohnmobils 1 abgetrennt. Die Seitenwand 6 weist eine Tür 8 auf (siehe Figur 2), durch die der Stauraum 3 vom Innenraum 7 her betretbar ist.

Figur 2 zeigt einen Schnitt entlang der Schnittlinie II-II durch das in Figur 1 dargestellte Wohnmobil 1. Zwischen der Decke 5 des Stauraums 3 und dem Dach 9 des Wohnmobils 1 wird ein Raum 10 abgegrenzt, der als Schlafraum 11 und/oder Staufach 12 verwendbar ist. Bei einer Nutzung des Raums 10 als Schlafraum 11 ist die Decke 5 als Liegefläche 13 ausgestaltet.

Figur 3 zeigt einen Längsschnitt gemäß der in Figur 2 dargestellten Schnittlinie III-III durch das in Figur 1 und in Figur 2 dargestellte Wohnmobil 1. Zwischen einem Boden 14 und der Decke 5 weist der Stauraum 3 eine Höhe H₁ auf. Die Decke 5 ist aus zwei Teildecken 15, 16 zusammengesetzt, die über ein Gelenk 17 beweglich miteinander verbunden sind. Durch ein Verschwenken der Teildecke 15 in Pfeilrichtung x wird die Höhe H₁ des Stauraums 3 in einem Bereich 18 auf eine Höhe H₂ erhöht. Bei geöffneter Tür 8 (in Fig. 3 geöffnet dargestellt) ist nun der Stauraum 3 vom Innenraum 7 her auch dann aufrecht betretbar, wenn die betreffende Person eine Körpergröße aufweist, die über der Raumhöhe H1 liegt. Eine vollständige Wiederherstellung der Decke 5 wird durch Zurückklappen der Teildecke 15 gegen die Pfeilrichtung x erreicht. Hierbei kommt die Teildecke 15 wieder auf einer Auflage 19 zu liegen, die an einer Wand 20 des Wohnmobils 1 angebracht ist. Auf der der Wand 20 gegenüberliegenden Wand ist selbstverständlich ebenfalls eine der Auflage 19 entsprechende Auflage vorhanden.

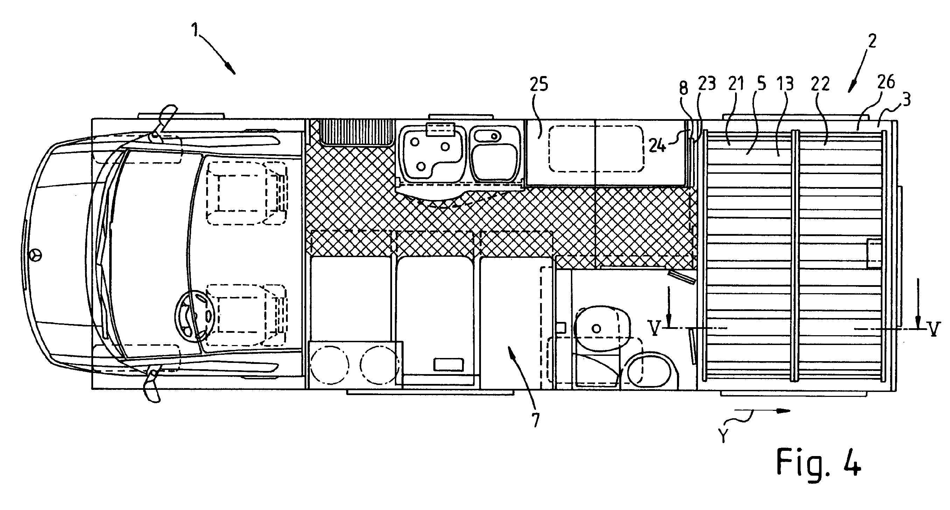

In Figur 4 ist eine weitere Variante eines Wohnmobils 1 dargestellt. Dieses Wohnmobil weist in einem Heckbereich 2 eine Liegefläche 13 auf, von der die Lattenroste 21, 22 dargestellt sind. Die Liegefläche 13 wird gleichzeitig als Decke 5 eines unter der Liegefläche 13 angeordneten Stauraums 3 genutzt. Von einem Innenraum 7 des Wohnmobils 1 kann der Stauraum 3 durch eine Tür 8 betreten werden. Die Tür 8 ist als Schiebetür 23 ausgestaltet, die in einen Zwischenraum 24 zurückschiebbar ist. Der Zwischenraum 24 ist zwischen dem Stauraum 3 und einem Einbauschrank 25 angeordnet. Wenn nun beabsichtigt ist, den Stauraum 3 als Hobbyraum 26 zu nutzen bzw. den Stauraum 3 in den Innenraum 7 zu integrieren, dann kann der Lattenrost 21 in Pfeilrichtung y gegen den Lattenrost 22 verschoben werden.

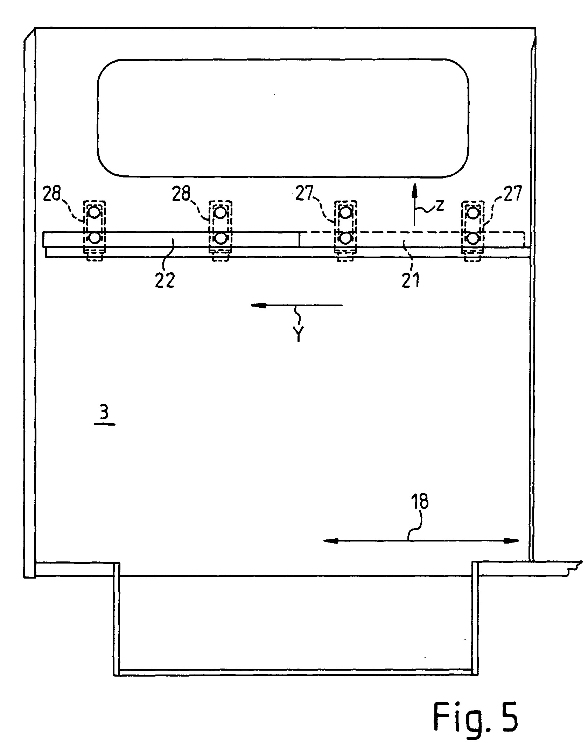

Figur 5 zeigt einen Schnitt durch den Heckbereich 2 des in Figur 4 dargestellten Wohnmobils 1 entlang der Schnittlinie V-V. Der Lattenrost 21 ist in Halterungen 27 und der Lattenrost 22 in Halterungen 28 aufgehängt. Durch Anheben in Pfeilrichtung z kann der Lattenrost 21 aus den Halterungen 27 entnommen werden und nach einem Verschieben in Pfeilrichtung y über dem Lattenrost 22 in die Halterungen 28 eingehängt werden. Hierdurch entsteht im Stauraum 3 ein Bereich 18, in den ein Erwachsener aufrecht stehend eintreten kann.

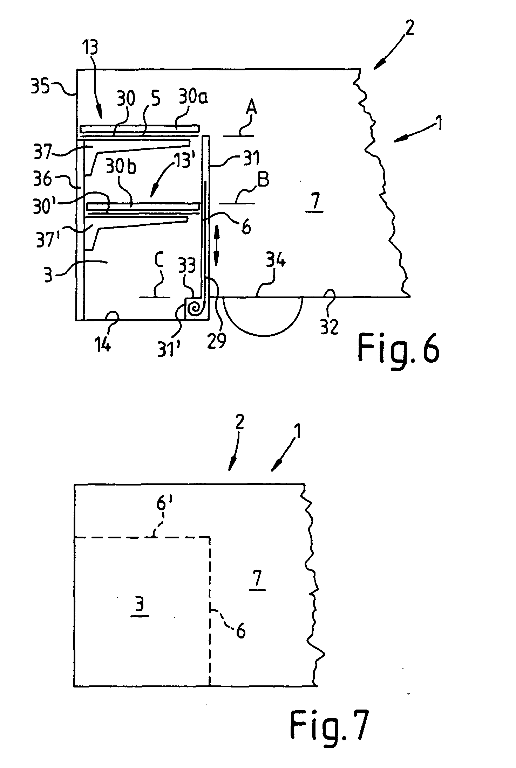

Figur 6 zeigt ein weiteres in einem Heckbereich 2 aufgeschnitten dargestelltes Wohnmobils 1. Das Wohnmobil 1 weist einen Stauraum 3 auf, der zu einem Innenraum 7 des Wohnmobils 1 durch einen Rolladen 29 und einen Unterbau 30 abgetrennt ist. Der Rolladen 29 dient als Seitenwand 6 und der Unterbau 30 als Decke 5 des Stauraums 3. Der Rolladen 29 läuft in seitlichen Führungen 31 und besitzt einen Rolladenkasten 31', der auf einem Boden 14 des Stauraums 3 angeordnet ist, der tiefer liegt als ein Boden 32 des Innenraums 7. Hierdurch bildet der Rolladenkasten 31' mit einer Oberseite 33 eine Ebne 34 mit dem Boden 32 des Innenraums 7. Somit ist der Rolladenkasten 31' vollständig in den Boden 32 integriert. An einer Heckwand 35 des Wohnmobils 1 sind zwei Schienen 36 befestigt (in Figur 6 ist nur eine Schiene 36 zu sehen). In diese Schienen 36 können Tragarme 37 eingehängt werden, die den Unterbau 30 halten. Auf dem Unterbau 30 ist eine Matratze 30a angeordnet, die auf dem Unterbau 30 eine Liegefläche 13 entstehen lässt. Mit Hilfe von weiteren Tragarmen 37', eines weiteren Unterbaus 30' und einer weiteren Matratze 30b kann im Stauraum 3 eine weitere Liegefläche 13' erstellt werden. Diese ist vom Innenraum 7 her zugänglich, wenn der Rolladen 29 aus der geschlossenen Stellung A in die halb geöffnete Stellung B zurückgefahren ist. Durch völliges Einfahren des Rolladens 29 in die Stellung C und Abnahme der Tragarme 37, 37', der Matratzen 30a, 30b und der Unterbauten 30, 30' wird der Innenraum 7 um den Stauraum 3 vergrößert. Wenn der Rolladen in der halb geöffneten Stellung B steht, dann ist trotz des Vorhandenseins einer zweiten Liegefläche 13' noch ein zum Innenraum 7 vollständig abgeschlossener Stauraum 3 verfügbar.

Figur 7 zeigt eine Draufsicht auf einen Heckbereich 2 eines weiteren Wohnmobils 1. In der Draufsicht wird deutlich, dass eine Stauraum 3 gegenüber einem Innenraum 7 durch zwei Seitenwände 6, 6' abgetrennt ist.

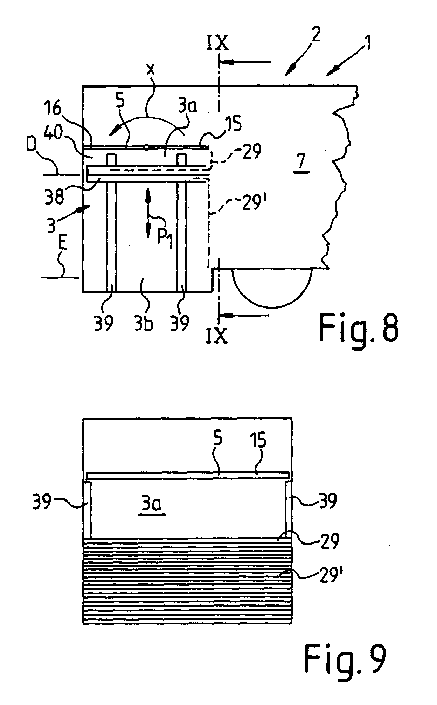

Figur 8 zeigt ein weiteres in einem Heckbereich 2 aufgeschnitten dargestelltes Wohnmobil 1. Ein Stauraum 3 ist durch eine Decke 5 und Rolläden 29, 29' von einem Innenraum 7 des Wohnmobils 1 abgegrenzt. Die Rolläden 29, 29' werden von einem Zwischenboden 38 aufgenommen. Der Zwischenboden 38 ist an Schiebeführungen 39 in Richtung des Doppelpfeils P₁ im Stauraum 3 verschiebbar. Der Zwischenboden 38 teilt den Stauraum 3 in zwei Teilstauräume 3a, 3b. Durch Verfahren des Zwischenbodens 38 aus der dargestellten Stellung D in eine angedeutet Stellung E und Einfahren des Rolladens 29 ist der Stauraum 3 vom Innenraum 7 her begehbar. Durch Zurückklappen der aus Teildecken 15, 16 bestehenden Decke 5 in Pfeilrichtung x kann der Zugang zum Stauraum 3 noch weiter erleichtert werden. In der Stellung D des Zwischenbodens 38 ist auch daran gedacht, den Teilstauraum 3a als Bettkasten 40 zu nutzen, der durch Anheben der Teildecke 15 oder durch Zurückfahren des Rolladens 29 zugänglich ist.

Figur 9 zeigt einen Schnitt durch das in Figur 8 dargestellte Wohnmobil entlang der Schnittlinie IX-IX. In der Schnittdarstellung steht der Zwischenboden 38 in einer von Figur 8 abweichenden Stellung zwischen den Stellungen D und E. Der obere Rolladen 29 ist vollständig eingefahren, so dass der Teilstauraum 3a vom Innenraum 7 her zugänglich ist. Der untere Rolladen 29' ist ausgefahren und versperrt den Zugang vom Innenraum 7 zum Teilstauraum 3b. Oberhalb der Schiebeführungen 39 ist die Decke 5 angeordnet.

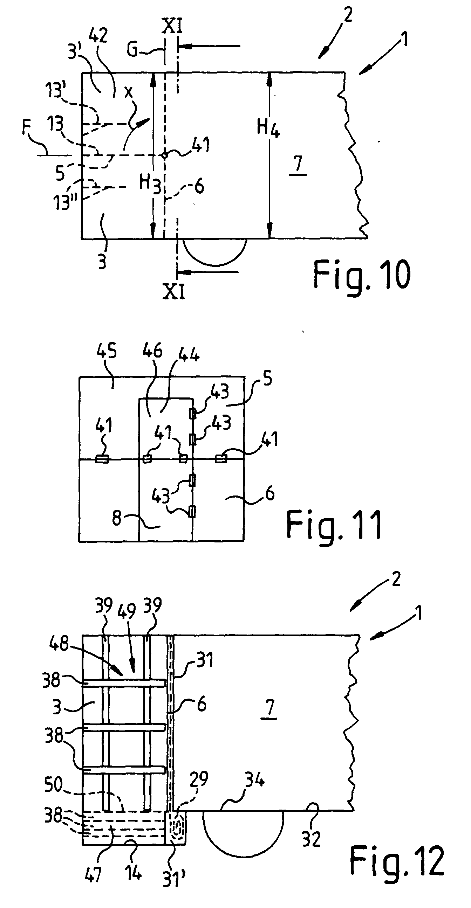

Figur 10 zeigt eine Seitenansicht eines Heckbereichs 2 eines weiteren Wohnmobils 1. Dieses Wohnmobil 1 besitzt einen Stauraum 3, auf dessen Decke 5 eine Liegefläche 13 vorgesehen ist, wenn diese in Stellung F steht. Die Decke 5 ist mit einer Seitenwand 6 des Stauraums 3 über Scharniere 41 drehbar verbunden. Durch Verschwenken der Decke 5 in Pfeilrichtung x in die Stellung G wird gegenüber einem Innenraum 7 des Wohnmobils 1 ein Stauraum 3' abgegrenzt. In diesem Stauraum 3' können sperrige Gegenstände transportiert werden. Weiterhin ist es möglich an einer Heckwand 35 des Wohnmobils 1 Liegeflächen 13', 13'' anzubringen. Hierdurch entsteht im Wohnmobil 1 aus dem Stauraum 3' ein zweiter Innenraum 42, der vom Innenraum 7 bequem zugänglich ist und einen Höhe H₃ aufweist, die einer Höhe H₄ des Innenraums 7 entspricht.

Figur 11 zeigt einen Schnitt durch das in Figur 10 dargestellte Wohnmobil 1 entlang der Schnittlinie XI-XI. In dieser Schnittdarstellung wird deutlich wie bequem der Zutritt zum zweiten Innenraum 42 erfolgt. Die Seitenwand 6 weist eine Tür 8 auf, die über Scharniere 43 mit dieser verbunden ist. Die Seitenwand 6 und die Tür 8 sind über Scharniere 41 mit der Decke 5 und einer mit der Decke 5 über Scharniere 43 verbundenen Teiltür 44 verbunden. Durch diese Verbindungen 41, 43 entsteht in der Stellung G der Decke 5 (siehe Figur 10) eine große Trennwand 45, die eine zweiteilige Zimmertür 46 aufweist.

Figur 12 zeigt ein weiteres in einem Heckbereich 2 aufgeschnitten dargestelltes Wohnmobil 1. Das Wohnmobil 1 weist einen Innenraum 7 und einen Stauraum 3 auf, wobei der Stauraum 3 einen Boden 14 besitzt, der tiefer liegt als ein Boden 32 des Innenraums 7. In einer durch diese Höhendifferenz gebildeten Wanne 47 des Stauraums 3 ist ein Rolladenkasten 31' angeordnet, der einen Rolladen 29 aufnimmt, der in Führungen 31 läuft. Durch den Rolladen 29 ist der Stauraum 3 gegenüber dem Innenraum 7 abgetrennt. Der Rolladen 29 bildet somit eine Seitenwand 6 des Stauraums 3. Im Stauraum 3 sind Zwischenböden 38 angeordnet, die entlang von Schiebeführungen 39 verfahrbar sind. In Figur 12 sind mit durchgezogenen Linien drei Zwischenböden 38 dargestellt, die ein Stauregal 48 und/oder eine Stockbett 49 bilden. Das Stauregal 48 bzw. das Stockbett 49 sind durch Einrollen des Rolladens 29 vom Innenraum 7 zugänglich. Weiterhin besteht in Analogie zu Figur 1 eine Zugangsmöglichkeit über eine nicht dargestellte Tür 4 von außen. Durch gestrichelte Linien ist eine alternative Lage der drei Zwischenböden 38 in der Wanne 47 dargestellt. In dieser alternativen Stellung bildet die Oberseite 50 des oberen Zwischenbodens 38 eine Ebene 34 mit dem Boden 32 des Innenraums 7. Dies bedeutet, dass durch Zurückrollen des Rolladens 29 der Innenraum 7 um den Stauraum 3 erweiterbar ist. Gemäß einer nicht dargestellten Ausführungsvariante ist es vorgesehen in die Schiebeführungen 39 Möbelelemente wie zum Beispiel eine Sitzgruppe oder eine Tischerweiterung einzuhängen. Durch die Stellung des Rolladens 29 und die Position der Zwischenböden 38 ist es auch möglich eine Doppelstockbett und einen Stauraum zu realisieren.

Die Erfindung ist nicht auf dargestellte oder beschrieben Ausführungsbeispiele beschränkt. Sie umfaßt vielmehr Weiterbildungen der Erfindung im Rahmen der Schutzrechtsansprüche. Insbesondere sieht die Erfindung auch vor, einen im Seitenbereich oder Frontbereich eines Campingfahrzeugs angeordneten Stauraum in den Innenraum zu integrieren.

### Bezugszeichenliste:

- 1: Wohnmobil
- 2: Heckbereich
- 3: Stauraum
- 4: Tür
- 5: Decke
- 6: Seitenwand
- 7: Innenraum
- 8: Tür
- 9: Dach
- 10: Raum
- 11: Schlafraum
- 12: Staufach
- 13: Liegefläche
- 14: Boden
- 15: Teildecke
- 16: Teildecke
- 17: Gelenk
- 18: Bereich
- 19: Auflage
- 20: Wand
- 21: Lattenrost
- 22: Lattenrost
- 23: Schiebetür
- 24: Zwischenraum
- 25: Einbauschrank
- 26: Hobbyraum
- 27: Halterung
- 28: Halterung
- 29: Rolladen
- 29': Rolladen
- 30: Unterbau
- 30': Unterbau
- 30a: Matratze
- 30b: Matratze
- 31: Führung
- 31': Rolladenkasten
- 32: Boden
- 33: Oberseite
- 34: Ebene
- 35: Heckwand
- 36: Schiene
- 37: Tragarm
- 37': Tragarm
- 38: Zwischenboden
- 39: Schiebeführung
- 40: Bettkasten
- 41: Scharnier
- 42: zweiter Innenraum
- 43: Scharnier
- 44: Teiltür
- 45: Trennwand
- 46: Zimmertür
- 47: Wanne
- 48: Stauregal
- 49: Stockbett
- 50: Oberseite

## Patentansprüche

1. Campingfahrzeug, insbesondere Wohnmobil, Wohnwagen oder Campingbus mit einem Stauraum, wobei der Stauraum eine diesen nach oben begrenzende Decke und mindestens eine Seitenwand aufweist, die diesen zum Wohnraum des Fahrzeugs abtrennt, und wobei der Stauraum sowohl von außen als auch vom Innenraum zugänglich ist, dadurch gekennzeichnet, dass die Decke (5) und/oder mindestens eine Seitenwand (6, 6') zumindest teilweise entfernbar ist.

2. Campingfahrzeug nach Anspruch 1, dadurch gekennzeichnet, dass die Decke (5) und/oder die Seitenwand (6, 6') des Stauraums (3) abnehmbar und/oder zusammenschiebbar und/oder aufrollbar und/oder faltbar und/oder abklappbar ausgeführt ist.

3. Campingfahrzeug nach einem der vorhergehenden Ansprüche, dadurch gekennzeichnet, dass die entfernbare Decke (5) des Stauraums (7) einen Türsturz einer in der Seitenwand (6, 6') angeordneten Tür (8) bildet.

4. Campingfahrzeug nach einem der vorhergehenden Ansprüche, dadurch gekennzeichnet, dass auf der Decke (5) des Stauraums (3) eine Liegefläche (13) angeordnet ist.

5. Campingfahrzeug nach einem der vorhergehenden Ansprüche, dadurch gekennzeichnet, dass die Decke (5) des Stauraums vertikal verfahrbar, kippbar oder schwenkbar ist.

6. Campingfahrzeug nach einem der vorhergehenden Ansprüche, dadurch gekennzeichnet, dass eine Veränderung der vertikalen Position der Decke (5) des Stauraums (3) erfolgt, wobei zwischen der Liegefläche (13) und der Decke (5) des Stauraums (3) ein Staufach (40), insbesondere ein Bettkasten (40) ausbildbar ist.

7. Campingfahrzeug nach einem der vorhergehenden Ansprüche, dadurch gekennzeichnet, dass oberhalb des Stauraums (3) mindestens ein zusätzlicher Stauraum angeordnet ist.

8. Campingfahrzeug nach einem der vorhergehenden Ansprüche, dadurch gekennzeichnet, dass der Stauraum (3) mindestens einen in seiner vertikalen Position verstellbaren, insbesondere verschiebbaren Zwischenboden (38) aufweist.

9. Campingfahrzeug nach einem der vorhergehenden Ansprüche, dadurch gekennzeichnet, dass ein als Liegefläche (13) ausgebildeter Zwischenboden (38) vorgesehen ist.

10. Campingfahrzeug nach einem der vorhergehenden Ansprüche, dadurch gekennzeichnet, dass ein als Wickeltisch mit Wickelstelle und/oder Babybadewanne ausgebildeter Zwischenboden (38) vorgesehen ist.

11. Campingfahrzeug nach einem der vorhergehenden Ansprüche, dadurch gekennzeichnet, dass der Stauraum (3) gegenüber dem Innenraum (7) durch mindestens einen Rolladen (29, 29') abgegrenzt ist.

12. Campingfahrzeug nach einem der vorhergehenden Ansprüche, dadurch gekennzeichnet, dass mindestens ein von einem Zwischenboden (38) ausgehender oder an einem Zwischenboden (38) endender Rolladen (29, 29') vorgesehen ist.

13. Campingfahrzeug nach einem der vorhergehenden Ansprüche, dadurch gekennzeichnet, dass mindestens eine Seitenwand (6, 6') des Stauraums (3) durch einen Rolladen (29, 29') ausbildbar ist, wobei der Rolladenkasten (31') unter einem Boden (32) des Campingfahrzeugs (1) angeordnet ist.
